# EUROPÄISCHE PATENTSCHRIFT

(11) **EP 3 448 821 B1**
(45) Veröffentlichungstag und Bekanntmachung des Hinweises auf die Patenterteilung: **18.12.2019**
(21) Anmeldenummer: 17722405.2
(22) Anmeldetag: 27.04.2017
(51) Int. Cl.: C03C 19/00, B60K 37/06, C03C 23/00, C03B 23/00, G06F 3/0488

(54) **VERFAHREN ZUM LOKALEN UMFORMEN EINER GLATTEN OBERFLÄCHE EINES AUS GLAS ODER EINER GLASKERAMIK GEFERTIGTEN SUBSTRATES**
METHOD FOR LOCALLY DEFORMING A FLAT SURFACE OF A SUBSTRATE MADE OF GLASS OR A GLAS-CERAMIC
PROCÉDÉ POUR LA DÉFORMATION LOCALE D'UNE SURFACE LISSE D'UN SUBSTRAT CONFECTIONNÉ EN VERRE OU EN VITROCÉRAMIQUE

(30) Priorität: 28.04.2016 DE 102016207233
(43) Veröffentlichungstag der Anmeldung: 06.03.2019
(73) Patentinhaber: Fraunhofer-Gesellschaft zur Förderung der angewandten Forschung e.V., 80686 München (DE)
(72) Erfinder: KÜBLER, Rainer, 79106 Freiburg (DE); GUMBSCH, Peter, 79194 Gundelfingen (DE); RIST, Tobias, 79194 Gundelfingen (DE); GREMMELSPACHER, Matthias, 79106 Freiburg (DE); LANG, Britta, 79227 Schallstadt (DE)
(74) Vertreter: Rösler, Uwe
(86) Internationale Anmeldenummer: PCT/EP2017/060073
(87) Internationale Veröffentlichungsnummer: WO 2017/186857

(56) Entgegenhaltungen:
- DE-A1-102008 048 907
- DE-A1-102012 020 609
- DE-A1-102014 110 920
- DE-B- 1 075 805
- DE-C- 865 643
- DE-T2- 69 929 867
- DE-U1-202014 006 401
- US-A- 5 412 189
- US-A1- 2008 016 916

## Beschreibung

### Technisches Gebiet

Die Erfindung bezieht sich auf ein Verfahren zum lokalen Umformen einer glatten Oberfläche eines aus Glas oder einer Glaskeramik gefertigten Substrates.

### Stand der Technik

In einer Vielzahl unterschiedlicher Anwendungen und Ausbildungen von manuellen Bedienelementen für die Interaktion mit technischen Systemen und Geräten besteht der Wunsch die Anzahl der Bedienelemente aus Design- und Kostengründen zu reduzieren und zugleich den Grad an Multifunktionalität der meist in Form von Knöpfen oder Schaltern ausgebildeten Eingabemitteln zu steigern. Darüber hinaus soll im praktischen Umgang mit derartigen Bedienelementen ein möglichst wertiger Nutzereindruck entstehen, der dem haptischen Eindruck entsprechen soll, der sich beim Berühren hochwertiger Glas- oder Glaskeramikoberflächen ergibt. Ferner werden an die Oberflächenqualität der Bedienelemente hohe Anforderungen hinsichtlich einer hohen Oberflächengüte, einer einfachen Reinigung sowie Korrosions- und Kratzbeständigkeit, sowie auch Haltbarkeit und Alterungsbeständigkeit gestellt. All diesen Ansprüchen können grundsätzlich die Werkstoffe Glas oder Glaskeramik gerecht werden.

Bekannte Beispiele für Geräte mit hochwertigen Nutzeroberflächen mit intergierten oder adaptierten Bedienelementen, durch deren manuelle Berührung oder Betätigung technische Funktionen ausgelöst werden, stellen berührempfindliche Grafikoberflächen von Smartphones und Tablet-PC's dar. Eine Eingabe manueller Steuer- oder Aktivierungssignale erfolgt an der ansonsten glatt ausgebildeten Benutzeroberfläche zumeist durch Antippen und in Form von Wischgesten. Das an der Graphikoberfläche zusätzlich visuell wahrnehmbar dargestellte Eingabefeld vermittelt die zusätzlich erforderliche Information über den exakten Eingabeort zur Ausführung der Berührung. Somit ist für eine zielgenaue und direkte Bedienung einzelner graphisch unterlegter Bereiche auf der Benutzeroberfläche ein direkter Blickkontakt zur Bedienfläche erforderlich. Dieser Vorgang, bei dem ein Nutzer zunächst visuell die Bedienfläche erkennen muss und anschließend durch Berühren eines entsprechenden Bereiches die Interaktion auslöst, ist jedoch für eine Vielzahl von Anwendungen äußerst ungünstig. Insbesondere bei Tätigkeiten, die ein hohes Maß an Aufmerksamkeit für die Umgebung erfordern, stellt ein Blick zur Bedienoberfläche eine inakzeptable Ablenkung vom eigentlichen Geschehen dar. In diesem Zusammenhang sei auf die zunehmende Verbreitung von berührempfindlichen, grafikunterstützten Bedienflächen als manuelle Eingabe- bzw. Bedienkonsolen in Fahrzeugen hingewiesen, durch die sehr effektiv und kostengünstig verschiedenste Bedienelemente übersichtlich und platzsparend angeordnet und angesteuert werden können. Da jedoch, wie bereits erwähnt, für eine eindeutige Bedienung der Bedienmittel der Blickkontakt hin zur Bedienoberfläche notwendig ist, wird insbesondere im Kraftfahrzeugbau dennoch an haptisch wahrnehmbaren Knöpfen und Schaltern festgehalten, die insbesondere für die Betätigung sehr wichtiger und sehr häufig genutzter Fahrfunktionen zuständig sind. Derartige haptisch greif- und fühlbare Bedienelemente ermöglichen dem Nutzer eine eindeutige haptische Rückmeldung und ermöglichen eine ablenkungsfreie Bedienung aller mit diesen konventionellen Bedienelementen verbundenen Funktionen.

In Zusammenhang mit über eine Benutzeroberfläche erhaben ausgebildeten Bedienelementen sei zum Stand der Technik auf folgende Druckschriften hingewiesen:
Aus der Druckschrift DE 10 2011 115 379 A1 ist ein beschichtetes Glas- oder Glaskeramik-Substrat mit einer Schicht mit haptischen Eigenschaften zu entnehmen, wobei die Schicht eine haptisch fühlbare Struktur aufweist und vorzugsweise aus Kunststoffmaterial besteht.

Der Druckschrift US 2012/0146922 A1 beschreibt eine berührempfindliche Benutzeroberfläche, die auf einem Glassubstrat strukturiert aufgebrachte, haptisch wahrnehmbare Feldelemente vorsieht, die in einer Art Schachbrettanordnung ausgebildet und angeordnet sind und somit dem Nutzer eine haptisch wahrnehmbaren Oberflächenortsauflösung ermöglichen. Auch in diesem Fall sind die haptisch wahrnehmbaren Strukturfelder mit einer Kunststoffschicht belegt.

Sämtliche auf Kunststoffmaterial basierenden, haptisch wahrnehmbaren Oberflächenstrukturen weisen jedoch inhärent das Problem der Anhaftung von Partikeln, die sich als Verunreinigungen merklich machen, der Alterung, der mangelnde Kratzbeständigkeit sowie der Korrosion durch Reinigungsmittel und Medien, wie Öle und Fette auf, die bei der Benutzung durch den Nutzer auf die Kunststoffoberfläche übertragen werden können.

Zur Vermeidung der vorstehenden Problematik bietet es sich an, die entsprechenden Strukturen direkt in die Glasoberfläche einzuprägen, um hybride Materialstrukturen zu vermeiden. Aus der Druckschrift DE 197 13 309 C1 sind hierzu ein Verfahren sowie eine Vorrichtung zur Heißformgebung von Präzisionsstrukturen im Flachglas erläutert, bei dem ein erwärmtes Formgebungswerkzeug mit einer strukturgebenden Oberfläche auf einer Seite des Flachgases in das Glasmaterial gedrückt wird, wobei die Erwärmung und Erweichung des Glasmateriales zur Umformung über eine gezielte Erwärmung des Umformwerkzeuges selbst erfolgt. Die ausschließliche Erwärmung über das Werkzeug kann dazu führen, dass im noch nicht ausreichend erwärmten Glas beim Beginn des Umformvorganges Spannungen oder ganze Risse entstehen können. Zudem besteht die Gefahr des Anhaftens oder auch Klebens von erweichtem Glas am Werkzeug, zumal der Werkzeugkontakt solange andauern muss, bis das Glas auf die benötigte Umformtemperatur erhitzt ist. Dadurch werden unter Umständen zu hohe Grenzflächentemperaturen erreicht.

Die Druckschrift DE 10 2010 020 439 A1 beschreibt ein thermisches Umformverfahren für flächige Glassubstrate, bei dem bspw. eine umzuformende Glasscheibe ganzheitlich innerhalb eines Ofens erwärmt wird, während sie auf einem formgebenden Werkzeug aufliegt. Bei Erreichen der Erweichungstemperatur nimmt die Glasscheibe im Wege der auf ihr lastenden Gravitationskraft, ggf. unterstützt durch zusätzliche Über- bzw. Unterdruckkräfte, die Oberflächenform des Werkzeuges an, indem sich die Glasscheibe flächig an die Oberflächenkontur des Werkzeuges anschmiegt.

Ferner gehen aus den Druckschriften DE 10 2010 045 094 B2 sowie DE 103 444 41 A1 jeweils ein formgebendes Verfahren zur Oberflächenstrukturierung von Glasprodukten hervor, bei dem zu Zwecken der Formgebung auf die jeweils erhitzte und erweichte Glasproduktoberfläche ein formgebendes Walzen- oder Rollenwerkzeug kraftbeaufschlagt aufgesetzt wird. Die Verwendung derartiger Rollen- bzw. Walzenwerkzeuge hat jedoch den Nachteil, dass auch nicht zu strukturierende, ebene Glasoberflächenbereiche zwangsläufig, wenn auch nur geringfügig mitumgeformt werden und damit ihre ursprüngliche Oberflächengüte aus dem Floatglasprozess verlieren. Der in großen Teilen nicht benötigte Werkzeugkontakt mit den nicht umzuformenden Glasoberflächen führt auch unweigerlich zum Verschleiß und bedingt darüber hinaus einen weiteren verfahrenstechnischen Aufwand.

Die Druckschrift DE 10 2012 020 609 B2 erläutert ein Bedienelement für einen Kraftwagen, bei dem das haptisch wahrnehmbare Bedienelement über eine Glasoberfläche emporragt und vermittels eines durch Tiefziehen der Bedienoberfläche im erwärmten Zustand ausgebildet ist.

Die Druckschrift DE 10 2014 110 923 A1 offenbart ein Verfahren zur Herstellung eines geformten Glas- oder Glaskeramikartikels, bspw. einer Glaskeramik-Kochfläche, bei dem ein scheibenförmiges Ausgangsglas erwärmt und anschließend durch Applizieren einer Kraft geformt wird.

Die Druckschrift US 2016/0031737 A1 offenbart ein Verfahren zur Formung eines Glasartikels ohne die Verwendung eines Formwerkzeuges. Das erwärmte Glassubstrat wird in diesem Fall mittels Vakuumdruckdifferenzen umgeformt.

Beide vorstehenden Druckschriften beschreiben Umformprozesse, bei denen nicht der gesamte erwärmte Bereich einer Krafteinwirkung zu Zwecken einer Umformung unterliegt.

Die Druckschrift DE 691 14 680 T2 offenbart ein Verfahren zur Herstellung einer Ausgusstülle eines Glasbehälters, bei dem die umzuformende Fläche mittels eines Brenners erweicht und anschließend nach außen mittels einer Formungsrolle geformt wird.

Die Druckschrift US 2011/0039071 A1 offenbart ein Verfahren zur Herstellung erhabener Strukturen auf einem transparenten Substrat, bei dem Laserstrahlung zunächst eine Erhöhung des Absorptionskoeffizienten innerhalb eines Glases bewirkt und eine weitere Bestrahlung zu einer Expansion des Glasmaterials aufgrund des Energieeintrags führt.

Die Druckschrift DE 10 2014 110 920 A1 beschreibt ein Verfahren zur formfreien Herstellung eines geformten Glasartikels, vorzugsweise einer Glasscheibe, zu deren Verformung die Glasscheibe lokal erwärmt und längs ihrer gesamten Scheibendicke in einen erweichten Materialzustand übergeführt wird. Zum Zwecke der Formgebung wird eine Druckdifferenz zwischen beiden sich gegenüberliegenden Glasscheibenseiten angelegt, wodurch sich die Glasscheibe lokal je nach Druckdifferenz unter Ausbildung einer einseitig konvexen und jeweils einer gegenüberliegend konkaven Oberflächenform umformt. Der für die Materialumformung erforderliche Materialfluss erfolgt in diesem Fall orthogonal zur Scheibenlängserstreckung .

Aus der Druckschrift DE 10 2008 048 907 A1 ist ein Verfahren zum Erzeugen von erhabenen bzw. eingezogenen Strukturen zu entnehmen. Auch in diesem Fall wird eine Glasscheibe längs ihrer gesamten Scheibendicke lokal erwärmt und zum vollständigen Erweichen des Glasmaterials gebracht. Zum Zwecke einer lokalen Verformung dient in diesem Fall ein Anlegen einer Druckdifferenz an beiden sich gegenüberliegenden Glasseiten.

Die Druckschrift US 2008/0016916 A1 offenbart ein an sich bekanntes Prägeprinzip mit einem, ein Einprägemuster aufweisenden Formwerkzeug, das ganzflächig in einen thermisch erwärmten und erweichten Oberflächenbereich eines Glassubstrates gedrückt wird.

Die Druckschrift DE 10 75 805 B beschreibt ein Verfahren und eine Vorrichtung zur Erzeugung von inneren Vorsprüngen an Glashohlkörpern, bei dem die zur strukturierende Innenseite mit Hilfe eines Werkzeuges zum einen kontaktbehaftet erwärmt und zum anderen durch Applikation eines Unterdruckes formgebend verformt wird. Hierzu weist das Werkzeug eine konkav ausgebildete Hohlform auf, in die das oberflächig erweichte Glasmaterial regelrecht eingesogen wird und entsprechend der Werkzeugkontur formerhaltend strukturiert wird.

### Darstellung der Erfindung

Der Erfindung liegt die Aufgabe zugrunde ein Verfahren zum lokalen Umformen einer glatten Oberfläche eines aus Glas oder einer Glaskeramik gefertigten Substrates derart auszubilden, so dass einerseits gewährleitstet sein soll, dass die Glasoberfläche in den Bereichen, in denen keine Umformung stattfindet, keine durch den Umformprozess herrührenden Qualitätseinbußen erleidet. Zum anderen sollen haptisch wahrnehmbare Strukturen in die Substratoberfläche eingebracht werden, die sämtlichen Anforderungen an eine manuell bedienbare hochwertige Benutzeroberfläche entsprechen sollen, so insbesondere über eine hohe Oberflächengüte, einfache Reinigung, Korrosions- und Kratzbeständigkeit, Haltbarkeit, Alterungsbeständigkeit etc. verfügen sollen. Auch unter wirtschaftsökonomischen Gesichtspunkten soll das Verfahren für eine Massenfertigung im industriellen Maßstab geeignet sein.

Die Lösung der der Erfindung zugrunde liegenden Aufgabe ist im Anspruch 1 angegeben. Die lösungsgemäßen Erfindung in vorteilhafter Weise weiterbildenden Merkmale sind Gegenstand der Unteransprüche sowie der weiteren Beschreibung insbesondere unter Bezugnahme auf die Ausführungsbeispiele zu entnehmen.

Das lösungsgemäße Verfahren zum lokalen Umformen einer glatten Oberfläche eines aus Glas oder einer Glaskeramik gefertigten Substrates zeichnet sich durch die Kombination folgender Verfahrensschritte aus: In einem ersten Schritt wird ein Wärmeeintrag ausschließlich innerhalb eines lokal begrenzten Bereiches durch die Oberfläche des Substrates durchgeführt, wobei der lokal begrenzte Bereich wenigstens bereichsweise an einen nicht mit dem Wärmeeintrag beaufschlagten Oberflächenbereich des Substrates nahtlos angrenzt bzw. vollständig von diesem umgeben ist. Der Wärmeeintrag wird derart durchgeführt, so dass das Substrat innerhalb des lokal begrenzten Bereiches zumindest an der Oberfläche erweicht, d. h. einen plastisch verformbaren Zustand einnimmt. Hierbei bildet sich innerhalb des Substrates lateral sowie orthogonal zur Oberfläche innerhalb des lokal begrenzten Bereiches ein Temperatur- und Viskositätsgradient aus, so dass eine der Wärmeeintrag beaufschlagten Oberfläche des Substrates gegenüberliegende Substratoberfläche eine Viskosität oberhalb jener Viskositätswerte aufweist, bei der das Substratmaterial zu erweichen beginnt. Der Wärmeeintrag wird mittels auf die Oberfläche des Substrates gerichteter Laserstrahlung, Gasflamme, Infrarotstrahlung, elektrischer Mikrowellen oder Plasmaentladung durchgeführt.

In einem nachfolgenden Verfahrensschritt wird auf die erweichte Oberfläche innerhalb des lokal begrenzten Bereiches eine orthogonal zur Oberfläche orientierte Anpresskraft und/oder eine schräg zur Oberfläche orientierte Scherkraft appliziert, durch die das erweichte Substratmaterial verdrängt wird, wodurch sich seitlich zur Oberfläche gerichtete Verlagerungen des erweichten Substratmaterials ergeben, die sich durch in Erscheinung tretende Materialumformungen an der Oberfläche des erweichten Substrates auszeichnen, vermittels eines Werkzeuges, das in punktuellen oder flächigen Kontakt mit der erweichten Oberfläche des Substrats gebracht wird. Nach Erreichen der gewünschten Umformung, die insbesondere zum Erhalt einer haptisch wahrnehmbaren Oberflächenstruktur dient, wird das Substrat zum Erhalt einer innerhalb des lokalen Bereiches erstarrten und umgeformten Oberfläche abgekühlt.

Durch den nur lokal begrenzten Wärmeeintrag durch die glatte und vorzugsweise unbehandelte Oberfläche des Glas- oder Glaskeramiksubstrates ausschließlich innerhalb des wenigstens einen begrenzten Bereiches, in dem die gewünschte Oberflächenumformung stattfinden soll, bleibt die übrige, an diesen wenigstens einen Bereich angrenzende Oberfläche des Substrates unbeeinträchtigt sowohl hinsichtlich eines direkten Wärmeeintrages, als auch in Bezug auf eine mögliche Kontaktierung mit einem Umformwerkzeug und behält somit ihre ursprüngliche höchste Oberflächengüte aus dem Floatglasprozess unverändert bei.

Aber auch der auf die Oberfläche des Substrates innerhalb des begrenzten Bereiches gerichtete Wärmeeintrag erfolgt vorzugsweise in einer Weise, bei der die Oberflächengüte keine oder nur vernachlässigbar geringe Wärmeeintragsbedingte Oberflächendegradation erfährt. Dies wird mittels eines kontaktfreien Wärmeeintrages realisiert, bspw. unter Verwendung gerichteter Laserstrahlung, einer Apertur begrenzten Infrarotstrahlung oder mittels elektrischer Mikrowellen oder mittels einer lokalen Plasmaentladung über oder einer auf den lokal begrenzten Bereich an der Oberfläche gerichteten Gasflamme.

Der ausschließlich innerhalb des lokal begrenzten Bereiches durch die Oberfläche des Substrates gerichtete Wärmeeintrag wird vorzugsweise derart dosiert durchgeführt, so dass sich innerhalb des Substrates lateral sowie auch orthogonal zur Substratoberfläche ein Temperatur- und Viskositätsgradient ausbildet. Die lateral, d. h. längs zur Oberfläche orientierte Temperaturverteilung sollte zu einem lateralen Viskositätsgradienten führen, bei dem die Oberflächenbereiche, die sich nahtlos an den lokal begrenzten und mit dem Wärmeeintrag beaufschlagten Oberflächenbereich angrenzen, keine Erweichung erfahren, wohingegen die vom Wärmeeintrag beaufschlagte Oberfläche erweicht werden soll. In Abhängigkeit vom tatsächlich gewählten Substratmaterial, das vorzugsweise aus Glas oder einer Glaskeramik, bspw. Kalk-Natronglas, Borosilikatglas, Aluminosilikatglas, Quarzglas, Chalkogenidglas oder Mischungen aus den vorstehend genannten Gläsern mit Metallen oder Keramiken bestehen kann, wird der Wärmeeintrag beendet, sobald das Substrat an der Oberfläche innerhalb des lokal begrenzten Bereiches eine Viskosität zwischen 10⁵ und 10¹¹ Pa·s, vorzugsweise zwischen 10⁸ und 10⁹ Pa·s annimmt. Die vorstehenden Substratmaterialien verleihen aufgrund Ihrer thermischen Wärmeleiteigenschaften, Härte sowie glatten Oberflächenbeschaffenheit einem Endprodukt eine haptisch wahrnehmbare, hochwertige Oberflächenqualität.

Ebenfalls in Abhängigkeit von der Form und Größe des Substrates und insbesondere von der Substratdicke stellt sich ein orthogonal zur Oberfläche des Substrates orientierter Temperatur- und Viskositätsgradient ein, der die thermisch bedingte Erweichung des Substratmaterials in Tiefen- bzw. Dickenausdehnung innerhalb des Substrates bestimmt. Der Viskositätsgradient längs der Dicke des Substrates sollte sich vorzugsweise derart ausbilden, so dass die der Wärmeeintrag beaufschlagten Oberfläche des Substrates gegenüberliegende Substratoberfläche eine Viskosität oberhalb jener Viskositätswerte aufweist, bei der das Substratmaterial zu erweichen beginnt. In vorteilhafter Weise liegt das Substrat zudem auf einer wärmeabführenden Unterlage auf, so dass die unmittelbar auf der Unterlage aufliegende Substratoberfläche gekühlt werden kann.

In einer weiteren bevorzugten Ausführungsvariante des lösungsgemäßen Verfahrens bietet es sich an, insbesondere zu Zwecken der Vermeidung von thermisch induzierten mechanischen Materialspannungen und dadurch möglicherweise bedingten Materialrissen das Substrat im Vorfeld vor dem lokalen Wärmeeintrag gesamtheitlich vorzuwärmen, wobei das Substrat auf eine Temperatur unterhalb der Erweichungstemperatur des Substrates vorgewärmt wird. Die Vorwärmung kann vorzugsweise innerhalb eines hierfür geeigneten Wärmeofens vorgenommen werden.

Zum Zwecke der Oberflächenumformung innerhalb des lokal begrenzten Bereiches, in dem die Substratoberfläche einen erweichten Zustand im Wege des lokalen Wärmeeintrages angenommen hat, erfolgt eine lokale Kraftapplikation auf die erweichte Oberfläche innerhalb des lokal begrenzten Bereiches entweder gesamtheitlich, bereichsweise, lokal oder lokal verteilt, je nachdem in welcher Form die gewünschte Oberflächenumformung vorgenommen werden soll. Die Kraftapplikation kann in unterschiedlicher Weise vorgenommen werden.

Eine erste Möglichkeit der Kraftapplikation besteht in der Verwendung eines geeignet ausgebildeten Werkzeuges, das in punktuellen oder flächigen Kontakt mit der erweichten Oberfläche des Substrats gebracht wird. Auf diese Weise können orthogonal zur Oberfläche orientierte Anpresskräfte und/oder schräg zur Oberfläche orientierte Scherkräfte appliziert werden, durch die das erweichte Substratmaterial verdrängt wird, wodurch sich seitlich zur Oberfläche gerichtete Verlagerungen des erweichten Substratmaterials ergeben, die sich letztlich durch in Erscheinung tretende Materialumformungen an der Oberfläche des erweichten Substrates auszeichnen. Nicht notwendigerweise jedoch in vorteilhafter Form biete es sich an, das mit der Oberfläche in Kontakt tretende Werkzeug zum Zwecke der lokalen Oberflächenumformung vorzuwärmen.

Grundsätzlich ist es möglich, die auf die Oberfläche innerhalb des lokal begrenzten Bereiches einwirkende Kraft zeitlich während und/oder nach dem Wärmeeintrag zu applizieren. In gleicher Weise ist es möglich, die Kraftapplikation auf die Oberfläche innerhalb des lokal begrenzten Bereiches vor, während oder nach dem Abkühlen der Oberfläche zu beenden.

Durch die Erwärmung der Substratoberfläche ausschließlich an wenigstens einem lokal begrenzten Bereich der Oberfläche sind energetische Einsparungen sowie auch signifikante Verkürzungen der erforderlichen Prozesszeiten zu erwarten, zumal insbesondere im Hinblick auf industrielle Anwendungen des lösungsgemäßen Verfahrens die erforderlichen Aufheiz- sowie Abkühlvorgänge erheblichen Einfluss auf Prozesskosten sowie auch Prozesszeiten haben. Nur der guten Ordnung halber wird darauf hingewiesen, dass es mit Hilfe des lösungsgemäßen Verfahrens möglich ist, auf einer einzigen Substratoberfläche an einer Vielzahl jeweils lokal begrenzter Bereiche die lösungsgemäßen Verformungen vorzunehmen. Diese können an einer Substratoberfläche entweder zeitlich parallel oder zeitlich hintereinander durchgeführt werden, je nach vorhandenen Ressourcen.

Da, wie bereits erwähnt, alle nicht am Umformprozess beteiligten Oberflächenbereiche des Substrates keinen unmittelbar auf diese gerichteten Wärmeeintrag erfahren, bleibt die Oberflächenqualität eben dieser Oberflächenbereiche unbeeinflusst. Ferner wird im Wege der gezielten und lokalen Kraftapplikation auf die erweichte Substratoberfläche erwärmtes Substratmaterial vorwiegend seitlich zum Krafteintrag verdrängt. Auf diese Weise bleibt die dem Wärmeeintrag gegenüberliegende Substratoberfläche erhalten und weitgehend unbeeinflusst. Randnahe Spannungen innerhalb des Substrates lassen sich daher besser kontrollieren, zumal der Randbereich nicht erwärmt und somit keine mechanischen Spannungen durch den Umformprozess in den Randbereich eingetragen werden können.

Mit dem lösungsgemäßen Verfahren lässt sich vorzugsweise wenigstens ein Bedienelement zur manuellen Betätigung herstellen, das sich über oder unter einer Benutzeroberfläche erstreckt und über eine haptisch wahrnehmbare Strukturgröße sowie Strukturform verfügt, wobei zumindest die Benutzeroberfläche aus einem Glas- oder Glaskeramiksubstrat besteht. In einer bevorzugten Ausführungsform ist das Bedienelement einstückig aus dem Glas- oder Glaskeramikmaterial geformt und stellt somit eine sich über oder unter der Benutzeroberfläche einstückig erhabene bzw. abgesenkte haptisch wahrnehmbare Form dar, bspw. in Form einer konkaven oder konvexen Struktur, die über eine Strukturgröße verfügt, die vorzugsweise zwischen 100 µm und einigen wenigen Zentimetern beträgt.

Das Bedienelement ist vorzugsweise Teil einer druck- oder berührempfindlichen Grafikoberfläche, wie sie für die Bedienung elektrischer Geräte im Allgemeinen und insbesondere als Bedienpanel für Haushaltsgeräte, Geräte für die Unterhaltungsindustrie sowie für den Fahrzeugbereich um einige zu nennen, eingesetzt werden können. Denkbar ist vor allem auch die Verwendung und Ausbildung der Bedienelemente als Wandfunktionsschalter in Gebäuden zur Betätigung technischer Einheiten, bspw. von Lampen, Heizung, Klima- oder Alarmanlage. Die lösungsgemäßen Bedienelemente lassen sich vorzugsweise, je nach Ausbildung von Form und Größe als haptisch wahrnehmbare Positionierhilfen, Druckschalter, Tastschalter, Schiebeschalter oder Drehregler realisieren.

Hierbei ist die Substratoberfläche, die der Benutzeroberfläche entspricht, auf der wenigstens ein technisch funktionales Bedienelement angeordnet ist, vorzugsweise eben ausgebildet, jedoch besteht die Möglichkeit, die Benutzeroberfläche gesamtheitlich gekrümmt oder gewölbt auszubilden.

Neben einer haptisch wahrnehmbaren Strukturbildung auf der Substratoberfläche lässt sich das lösungsgemäße Verfahren gleichsam auch für die Strukturbildung von ausschließlich optisch wahrnehmbaren und/oder optisch funktionalen Strukturen an der Substratoberfläche einsetzen. So lassen sich im Wege des erläuterten Verfahrens auch Oberflächenstrukturen schaffen, die dem haptischen Berührempfinden aufgrund der geringen Strukturgröße unzugänglich sind, jedoch für Lichtwellen beugungs- und brechungsinitiierende Strukturen darstellen. Die Realisierung von optischen Gittern ist auf diese Weise bspw. möglich.

### Kurze Beschreibung der Erfindung

Die Erfindung wird nachstehend ohne Beschränkung des allgemeinen Erfindungsgedankens anhand eines Ausführungsbeispiels unter Bezugnahme auf die Zeichnungen exemplarisch beschrieben. Es zeigen:

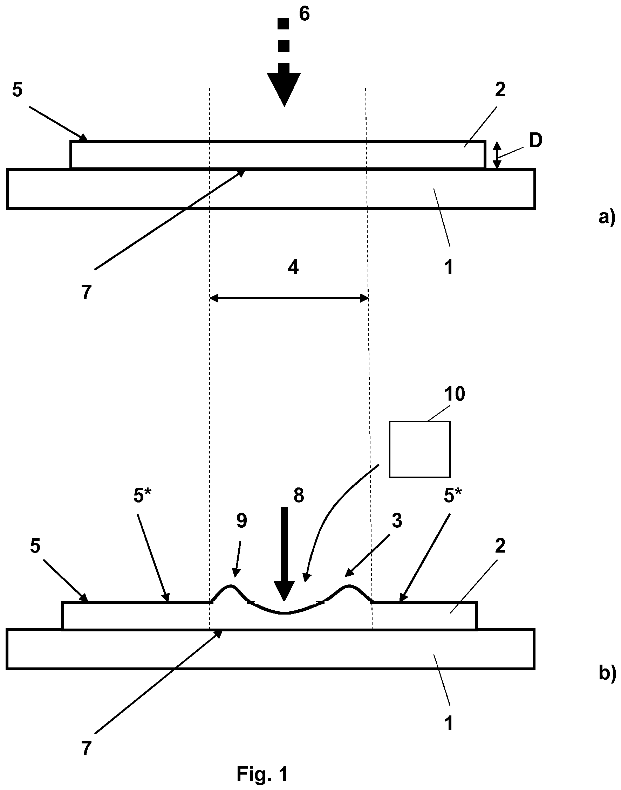

- Fig. 1a, b: Sequenzbilddarstellungen zur Illustration des lösungsgemäßen Verfahrens anhand einer umzuformenden Glasscheibe.

### Wege zur Ausführung der Erfindung, gewerbliche Verwendbarkeit

Figur 1a zeigt eine schematische Darstellung einer Unterlage 1, auf der ein Substrat in Form einer Glasscheibe 2 flächig aufliegt. Zu Zwecken einer lokalen Umformung 3, siehe Figur 1b, innerhalb eines lokal begrenzten Bereiches 4 auf der Oberseite 5 der Glasscheibe 2 wird die Glasscheibe 2 im lokal umzuformenden Bereich 4 mit einem Wärmeeintrag 6 erwärmt, bspw. mit Hilfe eines Laserstrahls, eines Infrarot-Strahlers, einer Gasflamme etc. Die Erwärmung des Glassubstrates 2 innerhalb des lokal begrenzten Bereiches 4 erfolgt soweit, bis sich die Oberfläche 5 innerhalb des lokal begrenzten Bereiches 4 erweicht und eine Viskosität, vorzugsweise zwischen 10⁸ und 10⁹ Pa·s annimmt. Hierbei stellt sich über die Dicke D der Glasscheibe 2 ein Temperatur- sowie auch Viskositätsgradient ein, so dass die gegenüberliegende, rückseitige Substratoberfläche 7, die der Rückseite der Glasscheibe 2 entspricht, ihre elastischen Eigenschaften weitgehend beibehält. Eine vorteilhafte Kühlung der rückseitigen Glasscheibenoberfläche 7, die über die Unterlage 1 erfolgen kann, stellt sicher, dass das Glas an der rückseitigen Substratoberfläche 7 nicht erweicht.

Der Wärmeeintrag 6 wird beendet, sobald der lokal begrenzte Bereich 4 an der Oberfläche 5 der Glasscheibe 2 gesamtheitlich bzw. weitgehend gesamtheitlich erweicht ist. Die sich nahtlos und einstückig an den lokal begrenzten Bereich 4 angrenzenden, übrigen Oberflächenbereiche 5* der Glasscheibe 2 verbleiben unterhalb der Erweichungstemperatur und werden somit nicht erweicht.

In enger zeitlicher Verzahnung zur Erwärmung der Oberfläche 5 innerhalb des lokal begrenzten Bereiches 4 erfolgt eine Umformung der erweichten Oberfläche innerhalb des lokal begrenzten Bereiches 4 durch einen Krafteintrag 8, vorzugsweise mit Hilfe eines Werkzeuges, während die Glasscheibe 2 auf der Unterlage 1 aufliegt. Durch einen mittigen innerhalb des lokal begrenzten Bereiches 4 auf die Oberfläche gerichteten Krafteintrag 8 wird Glasmaterial nach unten verdrängt, wodurch es zu einer lateralen Materialverlagerung innerhalb der Glasscheibe 2 kommt, wodurch sich eine Erhebung 9 radial um den Ort der Krafteinwirkung 8 ergibt.

Durch die Form und Größe des lokal begrenzten Bereiches 4 der erwärmten Oberfläche sowie die Art des Krafteintrages 8 können verschiedenartig haptisch wahrnehmbare Oberflächenstrukturen geprägt werden. Je nach Bedarf und haptischer Wirkung der sich ausbildende Oberflächenumformung 3 wird eine entsprechende Strukturgröße in die Glasscheibe eingeprägt, die lokale Erhebungen, vorzugsweise im mm-Bereich und laterale Ausdehnungen bis hin in den cm-Bereich aufweisen können.

In Kombination mit der Applikation einer Kraftwirkung 8 kann auf den erweichten Oberflächenbereich des Glassubstrates 2 vorzugsweise ein Glaskörper 10 zur Ausbildung einer haptischen Struktur aufgesetzt werden. Im Wege der lokalen Erwärmung erfährt der Glaskörper 10 ebenfalls eine lokale Erweichung, wodurch sich eine Stoffschlussverbindung zwischen dem Glaskörper 10 und dem Glassubstrat 2 ausbildet.

Zusätzlich ist es möglich, die Glasscheibe 2 vor oder nach erfolgter Oberflächenumformung in ihrer Gesamtheit zu formen, bspw. durch Biegen. Hierzu wird die Glasscheibe 2 gesamtheitlich erwärmt, bspw. in einem Prozessofen.

### Bezugszeichenliste

- 1: Unterlage
- 2: Glasscheibe
- 3: Umformung, Bedienelement
- 4: Lokal begrenzter Bereich
- 5: Oberfläche der Glasscheibe
- 5*: Lokal angrenzende Oberflächenbereiche der Glasscheibe
- 6: Wärmeeintrag
- 7: Rückseitige Glasscheibenoberfläche
- 8: Krafteinwirkung
- 9: Erhebung
- 10: Glaskörper

## Patentansprüche

1. Verfahren zum lokalen Umformen einer glatten Oberfläche eines aus Glas oder einer Glaskeramik gefertigten Substrates,
**gekennzeichnet durch** folgende Verfahrensschritte:
- Durchführen eines Wärmeeintrages ausschließlich innerhalb eines lokal begrenzten Bereiches durch die Oberfläche des Substrates mittels auf die Oberfläche des Substrates gerichteter Laserstrahlung, Gasflamme, Infrarotstrahlung, elektrischer Mikrowellen oder Plasmaentladung, derart, dass das Substrat innerhalb des lokal begrenzten Bereiches an der Oberfläche erweicht und sich innerhalb des Substrates lateral sowie orthogonal zur Oberfläche innerhalb des lokal begrenzten Bereiches ein Temperatur- und Viskositätsgradient ausbildet, so dass eine der Wärmeeintrag beaufschlagten Oberfläche des Substrates gegenüberliegende Substratoberfläche eine Viskosität oberhalb jener Viskositätswerte aufweist, bei der das Substratmaterial zu erweichen beginnt,
- Applizieren einer auf die erweichte Oberfläche innerhalb des lokal begrenzten Bereiches einwirkenden orthogonal zur Oberfläche orientierten Anpresskraft und/oder schräg zur Oberfläche orientierten Scherkraft, durch die das erweichte Substratmaterial verdrängt wird, wodurch sich seitlich zur Oberfläche gerichtete Verlagerungen des erweichten Substratmaterials ergeben, die sich durch in Erscheinung tretende Materialumformungen an der Oberfläche des erweichten Substrates auszeichnen, vermittels eines Werkzeuges, das in punktuellen oder flächigen Kontakt mit der erweichten Oberfläche des Substrats gebracht wird , und
- Abkühlen des Substrates zum Erhalt einer innerhalb des lokalen Bereiches erstarrten, umgeformten Oberfläche.

2. Verfahren nach Anspruch 1,
**dadurch gekennzeichnet, dass** die glatte Oberfläche des Substrates während des Wärmeeintrages keinen Kontakt zu einem festen Objekt erfährt, und
dass die glatte Oberfläche des Substrates zu Zwecken einer lokalen Umformung ausschließlich innerhalb des lokal begrenzten Bereiches kraftbeaufschlagt kontaktiert wird.

3. Verfahren nach Anspruch 1 oder 2,
**dadurch gekennzeichnet, dass** vor der Durchführung des Wärmeeintrages ausschließlich innerhalb des lokal begrenzten Bereiches durch die Oberfläche des Substrates das Substrat eine Vorwärmung erfährt, bei der das Substrat auf eine Temperatur unterhalb der Erweichungstemperatur des Substrates vorgewärmt wird.

4. Verfahren nach einem der Ansprüche 1 bis 3,
**dadurch gekennzeichnet, dass** der ausschließlich innerhalb des lokal begrenzten Bereiches durch die Oberfläche des Substrates erfolgende Wärmeeintrag beendet wird, sobald das Substrat an der Oberfläche innerhalb des lokal begrenzten Bereiches eine Viskosität zwischen 10⁵ und 10¹¹ Pa·s, insbesondere zwischen 10⁸ und 10⁹ Pa·s annimmt.

5. Verfahren nach einem der Ansprüche 1 bis 4,
**dadurch gekennzeichnet, dass** das Werkzeuges vor, während oder nach dem Abkühlen von der Oberfläche separiert wird.

6. Verfahren nach einem der Ansprüche 1 bis 5,
**dadurch gekennzeichnet, dass** das Applizieren der auf die Oberfläche innerhalb des lokal begrenzten Bereiches einwirkenden Kraft derart durchgeführt wird, dass sich an der lokal begrenzten Oberfläche des Substrates wenigstens eine haptisch und/oder optisch wahrnehmbare Struktur ausbildet.

7. Verfahren nach einem der Ansprüche 1 bis 6,
**dadurch gekennzeichnet, dass** das Substrat während des Durchführens des Wärmeeintrages, des Applizierens der auf die Oberfläche einwirkenden Kraft sowie des Abkühlens auf einer wärmeableitenden Unterlage aufliegt.

8. Verfahren nach einem der Ansprüche 1 bis 7,
**dadurch gekennzeichnet, dass** als Glas oder Glaskeramik folgende Materialien für das Substrat gewählt werden: Kalk-Natron-Glas, Borosilikatglas, Aluminosilikatglas, Quarzglas, Chalkogenidglas, Mischungen aus solchen Gläsern mit Metallen oder Keramiken.

## Claims

1. A method for locally deforming a flat surface of a substrate made of glass or a glass ceramic,
**characterized by** the following process steps:
- applying heat exclusively within a locally limited region via the surface of the substrate by means of laser radiation, gas flame, infrared radiation, electrical microwaves or plasma discharge directed towards the surface of the substrate in such a manner that the substrate is softened at least on the surface within the locally limited region, and a temperature and viscosity gradient is formed within the substrate laterally and orthogonally to the surface within the locally limited region so that a substrate surface opposite the surface of the substrate to which heat is applied has a viscosity above those viscosity values at which the substrate material begins to soften,
- applying a pressing force oriented orthogonally to the surface acting on the softened surface within the locally limited region and/or a shear force oriented obliquely to the surface by means of which the softened substrate material is displaced, with the result that displacements of the softened substrate material directed laterally to the surface are obtained which are **characterized by** material deformations appearing on the surface of the softened material, by means of a tool which is brought in punctuate or flat contact with the softened surface of the substrate, and
- cooling the substrate to obtain a surface that is deformed and set within the local region.

2. The method according to claim 1,
**characterized in that** the smooth surface of the substrate undergoes no contact with a solid object during the application of heat and
that the smooth surface of the substrate is contacted under the application of force for the purposes of locally deforming exclusively inside the locally limited region.

3. The method according to claim 1 or 2,
**characterized in that** before applying the heat exclusively within the locally limited region via the surface of the substrate, the substrate undergoes a pre-heating in which the substrate is pre-heated to a temperature below the softening temperature of the substrate.

4. The method according to one of claims 1 to 3,
**characterized in that** the application of heat taking place exclusively within the locally limited region via the surface of the substrate is ended as soon as the substrate on the surface within the locally limited region acquires a viscosity between 10⁵ and 10¹¹ Pa.s, in particular between 10⁸ and 10⁹ Pa.s.

5. The method according to one of claims 1 to 4,
**characterized in that** the tool is separated from the surface before, during or after cooling.

6. The method according to one of claims 1 to 5,
**characterized in that** the application of the force acting on the surface within the locally limited region is accomplished in such a manner that at least one haptically and/or visually perceptible structure is formed on the locally limited surface of the substrate.

7. The method according to one of claims 1 to 6,
**characterized in that** during the application of heat, the application of the force acting on the surface and the cooling the substrate rests on a heat-removing underlayer.

8. The method according to one of claims 1 to 7,
**characterized in that** as glass or glass ceramic the following materials are selected for the substrate: soda lime glass, borosilicate glass, aluminosilicate glass, quartz glass, chalcogenide glass, mixtures of such glasses with metals or ceramics.

## Revendications

1. Procédé de façonnage local d'une surface lisse d'un substrat en verre ou en vitrocéramique,
**caractérisé par** les étapes de procédé suivantes consistant à :
- effectuer un apport de chaleur exclusivement dans une zone localisée à travers la surface du substrat au moyen d'un un rayonnement laser dirigé sur la surface du substrat, un rayonnement infrarouge, des micro-ondes électriques ou une décharge de plasma, de sorte que le substrat se ramollisse dans la zone localisée à la surface et dans le substrat latéralement et orthogonalement à la surface localisée à l'intérieur de la zone localisée se forme un gradient de température et de viscosité, de sorte qu'une surface de substrat opposée à la surface d'apport de chaleur du substrat ait une viscosité supérieure à celle des valeurs de viscosité auxquelles le matériau de substrat commence à se ramollir,
- appliquer une force de contact orthogonale par rapport à la surface, agissant sur la surface ramollie dans la zone localisée et / ou orientée en cisaillement obliquement par rapport à la surface, déplaçant ainsi le matériau de substrat ramolli, faisant ainsi face latéralement à la surface moyennant quoi dirigé latéralement à la surface, moyennant quoi des déplacements du matériau de substrat ramolli dirigés latéralement à la surface sont obtenus, **caractérisés par** des transformations de matériau apparaissant à la surface du substrat ramolli, au moyen d'un outil qui est amené en contact sélectif ou en surface avec la surface ramollie du substrat, et
- refroidir le substrat pour obtenir une surface déformée à l'intérieur de la zone locale.

2. Procédé selon la revendication 1,
**caractérisé en ce que** la surface lisse du substrat au cours de l'apport de chaleur ne subit aucun contact avec un objet solide et la surface lisse du substrat est en contact pour la déformation locale exclusivement à l'intérieur de la zone localisée.

3. Procédé selon la revendication 1 ou 2,
**caractérisé en ce qu'**avant la mise en œuvre de l'apport de chaleur exclusivement dans la zone localisée à travers la surface du substrat, le substrat subit un préchauffage, dans lequel le substrat est préchauffé à une température en dessous de la température de ramollissement du substrat.

4. Procédé selon une quelconque des revendications 1 à 3,
**caractérisé en ce que** l'apport de chaleur à la surface du substrat est terminé exclusivement dans la zone localisée, dès que le substrat adopte à la surface dans la zone localisée une viscosité comprise entre 10⁵ et 10¹¹ Pa·s, en particulier entre 10⁸ et 10⁹ Pa.s.

5. Procédé selon une quelconque des revendications 1 à 4,
**caractérisé en ce que** l'outil est séparé de la surface avant, pendant ou après le refroidissement.

6. Procédé selon une quelconque des revendications 1 à 5,
**caractérisé en ce que** l'application de la force agissant sur la surface dans la zone localisée est effectuée de telle sorte qu'au moins une structure perceptible de manière haptique et / ou optique sur la surface localisée du substrat soit formée.

7. Procédé selon une quelconque des revendications 1 à 6,
**caractérisé en ce que** le substrat repose sur une surface dissipant de la chaleur pendant la mise en oeuvre de l'apport de chaleur, l'application de la force agissant sur la surface et le refroidissement.

8. Procédé selon l'une quelconque des revendications 1 à 7,
**caractérisé en ce que**, comme verre ou vitrocéramique, les matériaux suivants sont choisis pour le substrat: verre sodocalcique, verre borosilicate, verre aluminosilicate, verre de quartz, verre de chalcogénure, mélanges de tels verres avec des métaux ou céramiques.
